# EUROPÄISCHE PATENTSCHRIFT

(11) **EP 2 785 536 B1**
(45) Veröffentlichungstag und Bekanntmachung des Hinweises auf die Patenterteilung: **21.10.2015**
(21) Anmeldenummer: 12787027.7
(22) Anmeldetag: 19.11.2012
(51) Int. Cl.: B60C 11/03, B60C 11/00

(54) **FAHRZEUGLUFTREIFEN**
PNEUMATIC VEHICLE TYRE
PNEUMATIQUE DE VÉHICULE

(30) Priorität: 01.12.2011 DE 102011055916
(43) Veröffentlichungstag der Anmeldung: 08.10.2014
(73) Patentinhaber: Continental Reifen Deutschland GmbH, 30165 Hannover (DE)
(72) Erfinder: SENG, Matthias, 30449 Hannover (DE); DIENSTHUBER, Franz, 30559 Hannover (DE)
(74) Vertreter: Finger, Karsten
(86) Internationale Anmeldenummer: PCT/EP2012/072961
(87) Internationale Veröffentlichungsnummer: WO 2013/079343

(56) Entgegenhaltungen:
- EP-A1- 0 609 195
- EP-A1- 2 353 884
- EP-A1- 2 460 672
- DE-A1-102009 044 620

## Beschreibung

Die Erfindung betrifft einen Fahrzeugluftreifen, insbesondere einen Reifen für Personenkraftwagen, mit einem Laufstreifen, welcher durch Rillen, Nuten und dergleichen in Profilpositive, beispielsweise Profilblöcke, gegliedert ist und welcher in seinem mittleren Bereich eine geringere Profiltiefe aufweist als in den seitlichen, *wobei jede Laufstreifenhälfte - zwischen dem Reifenäquator und dem die Bodenaufstandsflächenbreite begrenzenden Laufstreifenrand - in drei Umfangsabschnitte geteilt ist, von welchen der dem Reifenäquator benachbart verlaufende erste Umfangsabschnitt eine Breite von 15 % der Bodenaufstandsflächenbreite und die beiden weiteren Umfangsabschnitte jeweils eine Breite von 17,5* % *der Bodenaufstandsflächenbreite aufweisen.*

Ein Fahrzeugluftreifen der eingangs genannten Art ist beispielsweise aus der EP 2 353 884 A1 bekannt. Dieser Reifen weist einen Laufstreifen mit zumindest drei in Umfangsrichtung umlaufenden Umfangsbereichen mit Profilpositiven auf, wobei der Laufstreifen, auf das Fahrzeug bezogen, einen Außenbereich und einen Innenbereich aufweist, wobei in diesen Bereichen schulterseitig strukturell unterschiedlich gestaltete Umfangsbereiche vorgesehen sind. Die Profilpositive im schulterseitigen Umfangsbereich im Innenbereich des Laufstreifens weisen eine um mindestens 10 % geringere Quersteifigkeit und eine um mindestens 15 % größere Umfangssteifigkeit auf als die Profilpositive im schulterseitigen Umfangsbereich im Außenbereich des Laufstreifens. Der Positivanteil im schulterseitigen Umfangsbereich im Innenbereich ist um mindestens 10 % größer als der Positivanteil im schulterseitigen Umfangsbereich im Außenbereich. Ein Reifen mit einem derartigen Laufstreifen soll einen gleichmäßigen Abrieb und ein gutes Fahrverhalten beim Kurvenfahren und bei hoher Geschwindigkeit aufweisen. Der aus der EP 0 609 195 A1 bekannte Fahrzeugreifen weist einen drehrichtungsgebunden ausgeführten Laufstreifen auf, welcher durch V-förmig verlaufende Hauptrillen und durch Nuten, die die Hauptrillen in Umfangsrichtung miteinander verbinden, in Profilblöcke gegliedert ist. Die erwähnten Nuten weisen jeweils einen breiten und einen schmalen Nutabschnitt auf, wobei die schmalen Nutabschnitte jene sind, die beim Abrollen des Reifens zuerst in die Kontaktfläche mit dem Untergrund eintreten. Ein Reifen mit einem derart ausgeführten Laufstreifen soll hinsichtlich der Stabilität des Laufstreifenprofils verbessert sein.

Weitere Fahrzeugluftreifen der eingangs genannten Art sind in einer Vielzahl von Ausführungen bekannt. Laufstreifenprofile, welche sich aus Profilblockreihen zusammensetzen und für Winterreifen vorgesehen sind, sind beispielsweise aus der US 2002/069949 A1 und der WO 2011/060900 A1 bekannt. In diesen Druckschriften steht es im Vordergrund, durch die Anordnung und Ausführung der Einschnitte die Umfangssteifigkeit der Profilblöcke gezielt zu beeinflussen.

Bei der Entwicklung von Fahrzeugluftreifen wird die Abriebsperformance üblicherweise in einem iterativen Verfahren in mehreren Schritten optimiert. Es ist bekannt, dass die Abriebsperformance eines Laufstreifens von der Umfangssteifigkeit bzw. deren Verteilung über die Laufstreifenbreite in Kombination mit der zum Abreiben zur Verfügung stehenden Gummimenge und deren Verteilung über die Reifenbreite beeinflusst wird. Jeder Entwicklungsschritt beinhaltet üblicherweise die Profilauslegung, den Reifenbau und sowohl indoor als auch outdoor stattfindende Abriebsversuche. Dies bedingt eine lange Entwicklungszeit und hohe Entwicklungskosten. Bezüglich der Abriebsperformance ist ein Reifen dann optimal ausgelegt, wenn der Laufstreifengummi derart abreibt, dass über die gesamte Laufstreifenbreite gleichzeitig die gesetzlich vorgeschriebene Mindestprofiltiefe erreicht wird.

Der Erfindung liegt die Aufgabe zugrunde, einen Fahrzeugluftreifen der eingangs genannten Art derart auszuführen, dass die erwünschte optimale Abriebsperformance erreicht werden kann.

Gelöst wird die gestellte Aufgabe erfindungsgemäß dadurch, dass sich im ersten und im zweiten Umfangsabschnitt jeweils ein geringerer Anteil an der Positivfläche der Laufstreifenhälfte befindet als im dritten Umfangsabschnitt und im ersten und im zweiten Umfangsabschnitt die Umfangssteifigkeit jeweils geringer ist als im dritten Umfangsabschnitt.

Die Erfindung vermittelt daher die Lehre, bei einer Teilung des Laufstreifens in die erwähnten Umfangsabschnitte in den beiden laufstreifenaußenseitig gelegenen Umfangsabschnitten die größte Umfangssteifigkeit und den größten Anteil an der Positivfläche vorzusehen. Das Laufstreifenprofil wird daher gemäß dieser Lehre mit einer entsprechenden Verteilung und Anordnung der Profilpositive und -negative ausführt. Mit der Erfindung lässt sich in einem Laufstreifen mit einer geringeren Profiltiefe im mittleren Bereich eine Abriebperformance erzielen, die über die Laufstreifenbreite und die gesamte Lebensdauer des Reifens gleichmäßig ist, insbesondere kann die gesetzlich vorgeschriebene Mindestprofiltiefe gleichzeitig im gesamten Laufstreifen erreicht werden. Darüber hinaus kann ein erfindungsgemäß ausgeführter Laufstreifen eine deutlich höhere Kilometerleistung als herkömmlich ausgeführte Reifen aufweisen.

Das Laufstreifenprofil gemäß der Erfindung wird insbesondere derart ausgelegt, dass in den ersten und den zweiten Umfangsabschnitten jeweils zwischen 28 % und 32 %, vorzugsweise in der Größenordnung von 30 %, der Positivfläche vorhanden sind. In den dritten Umfangsabschnitten sollten zwischen 35 % und 45 %, insbesondere in der Größenordnung von 40 %, der Positivfläche vorhanden sein. Es handelt sich um optimale Bereiche, die es gestatten, die erwünschte gleichmäßige Abriebsperformance über die Laufstreifenbreite zu erzielen.

Wie bereits erwähnt spielt auch die Umfangssteifigkeit in den einzelnen Umfangsabschnitten eine wichtige Rolle bei der Vergleichmäßigung der Abriebsperformance über die Laufstreifenbreite. Dabei sollte die Umfangssteifigkeit des ersten Umfangsabschnittes geringer sein als jene des zweiten Umfangsabschnittes. Die Umfangssteifigkeit der Umfangsabschnitte nimmt daher in der Laufstreifenmitte zum Laufstreifenrand schrittweise zu. Auch bezüglich der Umfangssteifigkeiten können optimale Bereiche definiert werden. In den beiden ersten Umfangsabschnitten sollten in Summe 18 % bis 22 % der Umfangssteifigkeit des gesamten Laufstreifens, insbesondere in der Größenordnung von 20 % generiert werden. In den beiden zweiten Umfangsabschnitten sollten in Summe 28 % bis 32 %, insbesondere in der Größenordnung von 30 %, der Umfangssteifigkeit generiert werden und in den beiden dritten Umfangsabschnitten in Summe 45 % bis 55 %, insbesondere in der Größenordnung von 50 %, der Umfangssteifigkeit des gesamten Laufstreifens.

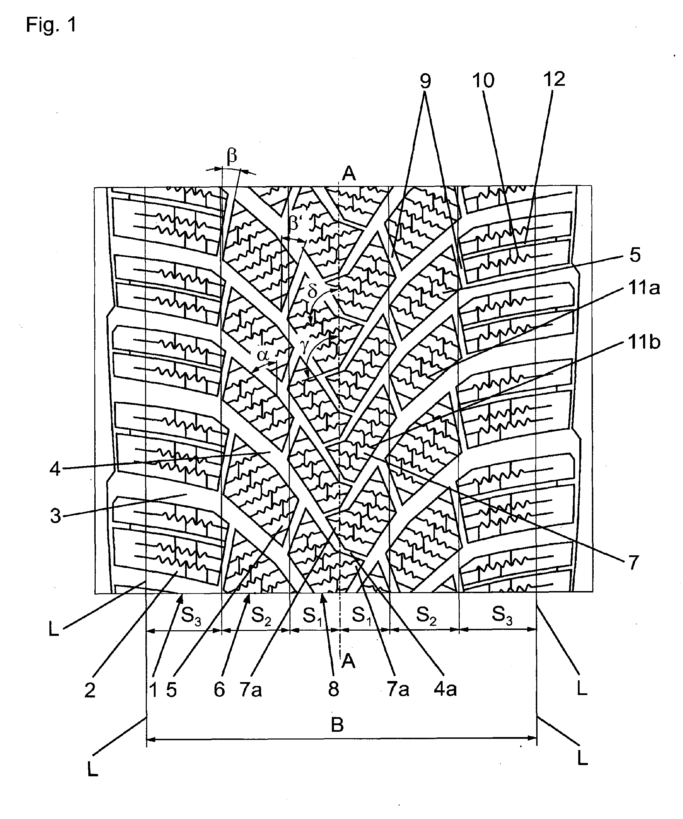

Weitere Merkmale, Vorteile und Einzelheiten der Erfindung werden nun anhand der Zeichnung näher beschrieben. Dabei zeigt die einzige Figur, Fig. 1, eine Draufsicht auf eine Teilabwicklung eines Laufstreifenprofils eines Fahrzeugluftreifens mit einer Ausführungsform der Erfindung.

Der in Fig. 1 dargestellte Laufstreifen ist für einen Fahrzeugluftreifen für Personenkraftwagen in Radialbauart, insbesondere für den Einsatz unter winterlichen Fahrbedingungen, vorgesehen und weist vorzugsweise eine Außenkontur mit einem Laufflächenradius von 300 mm bis 400 mm auf. Die Erfindung ist jedoch nicht auf Winterreifen eingeschränkt, sie ist gleichermaßen auf Sommerreifen anwendbar. Der beispielhaft dargestellte Laufstreifen weist ferner ein laufrichtungsgebunden ausgeführtes Profil auf. Die Erfindung ist nicht auf solche Laufstreifenprofile eingeschränkt, sie ist vielmehr auf alle Arten von Laufstreifenprofilen anwendbar.

In Fig. 1 ist mit A-A der Reifenäquator bezeichnet, durch welchen der Laufstreifen des Fahrzeugluftreifens in zwei Hälften geteilt ist. Der Laufstreifen weist zwei Schulterblockreihen 1 auf, deren Profilblöcke 2 durch Quernuten 3, die im Wesentlichen in Laufstreifenquerrichtung bzw. unter einem kleinen spitzen Winkel in der Größenordnung von 5° bis 7° zur Laufstreifenquerrichtung geneigt verlaufen, voneinander getrennt sind. Die Quernuten 3 setzen sich in Richtung Laufstreifenmitte als Schrägrillen 4 fort, welche gegenüber der Umfangsrichtung bzw. dem Reifenäquator A-A und einem Winkel α von 30° bis 50° verlaufen, wobei der Winkel α in Richtung Reifenäquator A-A etwas kleiner wird. Durch den V-förmigen Verlauf der in den beiden Laufstreifenhälften angeordneten Schrägrillen 4 erhält das Laufstreifenprofil seine Laufrichtungsgebundenheit. Der Reifen ist derart am Fahrzeug zu montieren, dass die innenseitigen Enden der Schrägrillen 4 beim Abrollen des Reifens in Fahrtrichtung zuerst in den Untergrund eintreten. In jeder Laufstreifenhälfte begrenzen die Schrägrillen 4 Profilblöcke 5 und 7, die zu zwei weiteren Blockreihen 6 und 8 gehören. Die der Umfangsrichtung des Laufstreifens zugeordneten Kanten der Profilblöcke 5 und die laufstreifenaußenseitig verlaufenden Kanten der Profilblöcke 8 sind jeweils unter einem Winkel β, β' zur Umfangsrichtung geneigt, wobei β' um bis zu 5° größer ist als β und der Winkel β in der Größenordnung von 3° bis 15° gewählt wird. Kurze Umfangsnuten 9 trennen daher die paarweise zusammengehörenden Profilblöcke 5 und 7 und die Profilblöcke 5 von den Profilblöcken 2. Entlang des Reifenäquators A-A bilden die Profilblöcke 7 aus den beiden Blockreihen 8 einander überlappende und in Draufsicht etwa dreieckige Blockabschnitte 7a, welche von den Schrägrillen 4 und von kurzen Endabschnitten 4a der Schrägrillen 4 begrenzt sind. Die Endabschnitte 4a verlaufen unter einem Winkel γ zum Reifenäquator A-A, der in der Größenordnung von 90° bis 120° beträgt. Die dargestellte und beschriebene Ausführung und Ausgestaltung der Profilblöcke 2, 5, 7 und der diese begrenzenden Rillen 4 und Nuten 3, 9 ist lediglich beispielhaft, die Profilblöcke können auch anders ausgestaltet sein, insbesondere können sie derart ausgeführt sein, dass in Umfangsrichtung gerade umlaufende Umfangsnuten gebildet sind.

Sämtliche Profilblöcke 2, 5 und 7 weisen jeweils eine Anzahl von Einschnitten 10, 11a und 11b auf, deren Breite zwischen 0,4 mm und 0,8 mm beträgt. In den schulterseitigen Profilblöcken 2 sind jeweils zwei oder drei Einschnitte 10 vorgesehen, die in Draufsicht hauptsächlich zick-zack- bzw. wellenförmig verlaufen. Die Einschnitte 10 erstrecken sich zueinander und zu den von den Quernuten 3 begrenzten Blockkanten parallel, wobei zwischen den Einschnitten 10 eine schmale, etwa 1 mm breite Rille 12 gerade und parallel zu den Einschnitten 10 verläuft. In den Profilblöcken 5 und 7 sind bei der dargestellten Ausführungsform jeweils sechs oder sieben parallel zueinander verlaufende Einschnitte 11a, 11b angeordnet, die ebenfalls in Draufsicht großteils einen wellen- bzw. zick-zackförmigen Verlauf aufweisen und bezogen auf die Umfangsrichtung zu den Schrägrillen 4 gegensinnig geneigt sind. Der Neigungswinkel δ beträgt in der Größenordnung von 95° bis 120°.

Gemäß der Erfindung variieren die Positiv- und Negativflächen in bestimmten Umfangsabschnitten des Laufstreifens auf besondere Weise. Jede Laufstreifenhälfte wird zwischen dem Reifenäquator A-A und dem Laufstreifenrand L in drei Umfangsabschnitte S₁, S₂ und S₃ geteilt. Die beiden Laufstreifenränder L begrenzen die Bodenaufstandsflächenbreite B, die jene Breite ist, die der Laufstreifen des Reifens im Footprint gemäß E.T.R.T.O.-Standards (Last bei 70 % der Tragfähigkeit bei 2,5 bar Innendruck, Innenluftdruck 85 % von 2,5 bar) einnimmt. Der beim Reifenäquator A-A befindliche erste Umfangsabschnitt S₁ weist eine Breite von 15 % der Bodenaufstandsflächenbreite B, der an diesen anschließende zweite Umfangsabschnitt S₂ eine Breite von 17,5 % der Bodenaufstandsflächenbreite B auf und der dritte Umfangsabschnitt S₃ erstreckt sich zwischen dem Abschnitt S₂ und dem Laufstreifenrand L. Im Umfangsabschnitt. In den Umfangsabschnitten S₁ ist die Profiltiefe - beispielsweise die größte Tiefe der Schrägrillen 4- größer, insbesondere zwischen 8 mm und 9 mm, als in den Umfangsabschnitten S₃, in welchen die Profiltiefe vorzugsweise zwischen 7 mm und 7,5 mm beträgt. In den Umfangsabschnitten S₂ kann die Profiltiefe jener in den Umfangsabschnitten S₃ oder jener in den Umfangsabschnitten S₃entsprechen. In den beiden Laufstreifenhälften stimmen in Folge der symmetrischen Auslegung des Profils die Positivflächen überein. Die Positivfläche ist jener Teil der Gesamtfläche jeder Laufstreifenhälfte, der (bei neuem Reifen) von Gummimaterial eingenommen wird. Demnach ist die Negativfläche jener Teil der Gesamtfläche, der (bei neuem Reifen) von den Nuten, Rillen und Einschnitten eingenommen wird. Bei neuem Reifen beträgt die Positivfläche zwischen 60 % und 75 % der Gesamtfläche, je nachdem ob es sich um einen Winter- oder um einen Sommerreifen handelt.. Das Laufstreifenprofil wird gemäß der Erfindung derart ausgelegt, dass in den Umfangsabschnitten S₁ und S₂ jeweils zwischen 28 % und 32 % der Positivfläche, insbesondere etwa 30 %, und im Umfangsabschnitt S₃ zwischen 38 % und 42 %, insbesondere etwa 40 %, der Positivfläche vorhanden sind.

Für eine möglichst gleichmäßige Abriebsperformance bis zum Erreichen der gesetzlich vorgeschriebenen Mindestprofiltiefe, welche bei Sommerreifen 1,6 mm und bei Winterreifen 4 mm beträgt, ist eine weitere Maßnahme vorteilhaft, nämlich unterschiedliche Umfangssteifigkeiten in den einzelnen Umfangsabschnitten S₁, S₂ und S₃. Die Umfangssteifigkeiten des gesamten Laufstreifenprofils und der Umfangsabschnitte wird rechnerisch ermittelt, wobei eine der gängigen und bekannten Methoden zur Berechnung der Schub- und der Biegesteifigkeit von Profilelementen herangezogen werden kann, da es im Rahmen der Erfindung auf Umfangssteifigkeitsverhältnisse ankommt. Wird nun die Umfangssteifigkeit des Laufstreifens, die Umfangssteifigkeit innerhalb der Bodenaufstandsflächenbreite B, zugrunde gelegt, so soll die "Umfangssteifigkeitsverteilung" in den einzelnen Umfangsabschnitten S₁, S₂ und S₃ derart sein, dass in den Umfangsabschnitten S₁ in Summe zwischen 18 % und 22 %, insbesondere etwa 20 %, der Gesamtsteifigkeit generiert wird, in den beiden Umfangsabschnitten S₂ zwischen 28 % bis 32 %, insbesondere 30 %, und in den beiden Umfangsabschnitten S₃ zwischen 45 % bis 55 %, insbesondere etwa 50 %.

Diese "Verteilung" der Profilumfangssteifigkeiten hat in Kombination mit der erfindungsgemäßen Positivflächenverteilung nicht nur die erwünschte Verbesserung des Abriebsbildes - einen gleichmäßigen Abrieb über die Laufstreifenbreite - zur Folge sondern auch eine Erhöhung der Laufleistung.

### Bezugsziffernliste

- 1: Blockreihe
- 2: Profilblock
- 3: Quernut
- 4: Schrägrille
- 4a: Endabschnitt
- 5: Profilblock
- 6: Blockreihe
- 7: Profilblock
- 7a: Blockabschnitt
- 8: Blockreihe
- 9: Umfangsnut
- 10: Einschnitt
- 11a: Einschnitt
- 11b: Einschnitt
- 12: Rille
- A-A: Reifenäquator
- B: Bodenaufstandsflächenbreite
- S₁: Umfangsabschnitt
- S₂: Umfangsabschnitt
- S₃: Umfangsabschnitt
- L: Laufstreifenrand
- α: Winkel
- β: Winkel
- β': Winkel
- γ: Winkel
- δ: Winkel

## Patentansprüche

1. Fahrzeugluftreifen, insbesondere ein Reifen für Personenkraftwagen mit einem Laufstreifen, welcher durch Rillen, Nuten (3, 4) und dergleichen in Profilpositive, beispielsweise Profilblöcke (2, 5, 7), gegliedert ist und welcher in seinem mittleren Bereich eine geringere Profiltiefe aufweist als in den seitlichen Bereichen, *wobei jeder Laufstreifenhälfte - zwischen dem Reifenäquator (A-A) und dem die Bodenaufstandsflächenbreite (B) begrenzenden Laufstreifenrand (L) - in drei Umfangsabschnitte (S₁, S₂, S₃) geteilt ist, von welchen der dem Reifenäquator (A-A) benachbart verlaufende erste Umfangsabschnitt (S₁) eine Breite von 15 % der Bodenaufstandsflächenbreite (B) und die beiden weiteren Umfangsabschnitte (S₂, S₃) jeweils eine Breite von 17,5 % der Bodenaufstandsflächenbreite (B) aufweisen,*
**dadurch gekennzeichnet,**
**dass** sich im ersten und im zweiten Umfangsabschnitt (S₁, S₂) jeweils ein geringerer Anteil an der Positivfläche der Laufstreifenhälfte befindet als im dritten Umfangsabschnitt (S₃) und im ersten und im zweiten Umfangsabschnitt (S₁, S₂) die Umfangssteifigkeit jeweils geringer ist als im dritten Umfangsabschnitt (S₃).

2. Fahrzeugluftreifen nach Anspruch 1, **dadurch gekennzeichnet, dass** in den ersten und den zweiten Umfangsabschnitten (S₁, S₂) jeweils zwischen 28 % und 32 % der Positivfläche vorhanden ist.

3. Fahrzeugluftreifen nach Anspruch 2, **dadurch gekennzeichnet, dass** in den ersten und den zweiten Umfangsabschnitten (S₁, S₂) jeweils in der Größenordnung von 30 % der Positivfläche vorhanden ist.

4. Fahrzeugluftreifen nach Anspruch 1, **dadurch gekennzeichnet, dass** in den dritten Umfangsabschnitten (S₃) zwischen 35 % und 45 % der Positivfläche vorhanden ist.

5. Fahrzeugluftreifen nach Anspruch 4, **dadurch gekennzeichnet, dass** in den dritten Umfangsabschnitten (S₃) in der Größenordnung von 40 % der Positivfläche vorhanden ist.

6. Fahrzeugluftreifen nach Anspruch 1, **dadurch gekennzeichnet, dass** die Umfangssteifigkeit des ersten Umfangsabschnittes (S₁) geringer ist als die des zweiten Umfangsabschnittes (S₂),

7. Fahrzeugluftreifen nach einem der Ansprüche 1 bis 6, **dadurch gekennzeichnet, dass** in den ersten Umfangsabschnitten (S₁) in Summe 18 % bis 22 % der Umfangssteifigkeit des Laufstreifens generiert wird.

8. Fahrzeugluftreifen nach Anspruch 7, **dadurch gekennzeichnet, dass** in den ersten Umfangsabschnitten (S₁) in der Größenordnung von 20 % der Umfangssteifigkeit des Laufstreifens generiert wird.

9. Fahrzeugluftreifen nach Anspruch 6, **dadurch gekennzeichnet, dass** in den zweiten Umfangsabschnitten (S₂) in Summe 28 % bis 32 % der Umfangssteifigkeit des Laufstreifens generiert wird.

10. Fahrzeugluftreifen nach Anspruch 9, **dadurch gekennzeichnet, dass** in den zweiten Umfangsabschnitten (S₂) in der Größenordnung von 30 % der Umfangssteifigkeit des Laufstreifens generiert wird.

11. Fahrzeugluftreifen nach Anspruch 6, **dadurch gekennzeichnet, dass** in den dritten Umfangsabschnitten (S₃) in Summe 45 % bis 55 % der Umfangssteifigkeit des Laufstreifens generiert wird.

12. Fahrzeugluftreifen nach Anspruch 11, **dadurch gekennzeichnet, dass** in den dritten Umfangsabschnitten (S₃) in der Größenordnung von 50 % der Umfangssteifigkeit des Laufstreifens generiert wird.

## Claims

1. Pneumatic vehicle tyre, in particle a tyre for passenger cars, with a tread which is divided by grooves, channels (3, 4) and the like into profile positives, for example tread bars (2, 5, 7), and which has a smaller profile depth in its middle region than in the lateral regions, each tread half - between the tyre equator (A-A) and the edge of the tread (L) bounding the width of the ground contact area (B) - being divided into three circumferential portions (S₁, S₂, S₃), of which the first circumferential portion (S₁), which runs adjacent to the tyre equator (A-A), has a width of 15% of the width of the ground contact area (B) and the two further circumferential portions (S₂, S₃) each have a width of 17.5% of the width of the ground contact area (B),
**characterized in that**
a smaller proportion of the positive area of the tread half is located respectively in the first and second circumferential portions (S₁, S₂) than in the third circumferential portion (S₃) and the circumferential rigidity is respectively less in the first and second circumferential portions (S₁, S₂) than in the third circumferential portion (S₃).

2. Pneumatic vehicle tyre according to Claim 1, **characterized in that** in the first and second circumferential portions (S₁, S₂) there is respectively between 28% and 32% of the positive area.

3. Pneumatic vehicle tyre according to Claim 2, **characterized in that** in the first and second circumferential portions (S₁, S₂) there is respectively something of the order of 30% of the positive area.

4. Pneumatic vehicle tyre according to Claim 1, **characterized in that** in the third circumferential portions (S₃) there is between 35% and 45% of the positive area.

5. Pneumatic vehicle tyre according to Claim 4, **characterized in that** in the third circumferential portions (S₃) there is something of the order of 40% of the positive area.

6. Pneumatic vehicle tyre according to Claim 1, **characterized in that** the circumferential rigidity of the first circumferential portion (S₁) is less that of the second circumferential portion (S₂).

7. Pneumatic vehicle tyre according to one of Claims 1 to 6, **characterized in that** a total of 18% to 22% of the circumferential rigidity of the tread is generated in the first circumferential portions (S₁).

8. Pneumatic vehicle tyre according to Claim 7, **characterized in that** something of the order of 20% of the circumferential rigidity of the tread is generated in the first circumferential portions (S₁).

9. Pneumatic vehicle tyre according to Claim 6, **characterized in that** a total of 28% to 32% of the circumferential rigidity of the tread is generated in the second circumferential portions (S₂).

10. Pneumatic vehicle tyre according to Claim 9, **characterized in that** something of the order of 30% of the circumferential rigidity of the tread is generated in the second circumferential portions (S₂).

11. Pneumatic vehicle tyre according to Claim 6, **characterized in that** a total of 45% to 55% of the circumferential rigidity of the tread is generated in the third circumferential portions (S₃).

12. Pneumatic vehicle tyre according to Claim 11, **characterized in that** something of the order of 50% of the circumferential rigidity of the tread is generated in the third circumferential portions (S₃).

## Revendications

1. Bandage pneumatique pour roue de véhicule, en particulier bandage pour voitures automobiles, présentant une bande de roulement divisée en profils positifs par des sillons, rainures (3, 4) et similaires, par exemple des blocs profilés (2, 5, 7), et présentant dans sa partie centrale une profondeur profilée moindre que dans les parties latérales,
chaque moitié de bande de roulement entre l'équateur (A-A) du bandage de roue et le bord (L) de bande de roulement qui délimite la largeur (B) de la surface d'appui au sol est divisée en trois sections périphériques (S₁, S₂, S₃) parmi lesquelles la première section périphérique (S₁) qui s'étend au voisinage de l'équateur (A-A) du bandage de roue présente une largeur qui correspond à 15 % de la largeur (B) de la surface d'appui au sol et les deux autres sections périphériques (S₂, S₃) présentent chacune une largeur qui correspond à 17,5 % de la largeur (B) de la surface d'appui au sol,
**caractérisé en ce que**
la proportion de surface positive de la moitié de bande de roulement située dans la première et la deuxième section périphérique (S₁, S₂) est moindre que dans la troisième section périphérique (S₃) et
**en ce que** la rigidité périphérique dans la première et la deuxième section périphérique (S₁, S₂) est moindre que dans la troisième section périphérique (S₃).

2. Bandage pneumatique pour roue de véhicule selon la revendication 1, **caractérisé en ce qu'**entre 28 % et 32 % de la surface positive sont situés dans la première et dans la deuxième section périphérique (S₁, S₂).

3. Bandage pneumatique pour roue de véhicule selon la revendication 2, **caractérisé en ce que** de l'ordre de 30 % de surface positive sont situés respectivement dans la première et dans la deuxième section périphérique (S₁, S₂).

4. Bandage pneumatique pour roue de véhicule selon la revendication 1, **caractérisé en ce qu'**entre 35 % et 45 % de la surface positive sont situés dans la troisième section périphérique (S₃).

5. Bandage pneumatique pour roue de véhicule selon la revendication 4, **caractérisé en ce que** de l'ordre de 40 % de la surface positive sont situés dans la troisième section périphérique (S₃).

6. Bandage pneumatique pour roue de véhicule selon la revendication 1, **caractérisé en ce que** la rigidité périphérique de la première section périphérique (S₁) est inférieure à celle de la deuxième section périphérique (S₂).

7. Bandage pneumatique pour roue de véhicule selon l'une des revendications 1 à 6, **caractérisé en ce qu'**au total 18 % à 22 % de la rigidité périphérique de la bande de roulement sont générés dans la première section périphérique (S₁).

8. Bandage pneumatique pour roue de véhicule selon la revendication 7, **caractérisé en ce que** de l'ordre de 20 % de la rigidité périphérique de la bande de roulement sont générés dans la première section périphérique (S₁).

9. Bandage pneumatique pour roue de véhicule selon la revendication 6, **caractérisé en ce qu'**au total 28 % à 32 % de la rigidité périphérique de la bande de roulement sont générés dans la deuxième section périphérique (S₂).

10. Bandage pneumatique pour roue de véhicule selon la revendication 9, **caractérisé en ce que** de l'ordre de 30 % de la rigidité périphérique de la bande de roulement sont générés dans la deuxième section périphérique (S₂).

11. Bandage pneumatique pour roue de véhicule selon la revendication 6, **caractérisé en ce qu'**au total 45 % à 55 % de la rigidité périphérique de la bande de roulement sont générés dans la troisième section périphérique (S₃).

12. Bandage pneumatique pour roue de véhicule selon la revendication 11, **caractérisé en ce que** de l'ordre de 50 % de la rigidité périphérique de la bande de roulement sont générés dans la troisième section périphérique (S₃).
